# EUROPÄISCHE PATENTSCHRIFT

(11) **EP 2 587 927 B1**
(45) Veröffentlichungstag und Bekanntmachung des Hinweises auf die Patenterteilung: **04.06.2014**
(21) Anmeldenummer: 11748643.1
(22) Anmeldetag: 23.08.2011
(51) Int. Cl.: A22C 21/00

(54) **VORRICHTUNG UND VERFAHREN ZUM VOLLSTÄNDIGEN LÖSEN ZUMINDEST EINES TEILS DES BRUSTKNORPELS VON EINER VOM BRUSTFLEISCH BEFREITEN GEFLÜGELKARKASSE**
DEVICE AND METHOD FOR COMPLETELY REMOVING AT LEAST ONE PART OF THE BREAST CARTILAGE FROM A POULTRY CARCASS THAT IS FREE OF BREAST MEAT
DISPOSITIF ET PROCÉDÉ DESTINÉ À DÉTACHER INTÉGRALEMENT AU MOINS UNE PARTIE DU CARTILAGE DE POITRINE À PARTIR D'UNE CARCASSE DE VOLAILLE LIBÉRÉE DE SON BLANC

(30) Priorität: 30.09.2010 DE 102010047660
(43) Veröffentlichungstag der Anmeldung: 08.05.2013
(73) Patentinhaber: Nordischer Maschinenbau Rud. Baader GmbH + Co. KG, 23560 Lübeck (DE)
(72) Erfinder: LANDT, Andreas, 23554 Lübeck (DE)
(74) Vertreter: Stork Bamberger
(86) Internationale Anmeldenummer: PCT/EP2011/064484
(87) Internationale Veröffentlichungsnummer: WO 2012/041610

(56) Entgegenhaltungen:
- DE-U1-202009 017 070
- US-A1- 2010 081 366
- US-B1- 6 283 847

## Beschreibung

Die vorliegende Erfindung betrifft eine Vorrichtung, ausgebildet und eingerichtet zum vollständigen Lösen zumindest eines Teils des Brustknorpels von einer vom Brustfleisch befreiten Geflügelkarkasse, umfassend einen zumindest einen Stützkörper zum Aufnehmen und Fixieren der Geflügelkarkasse aufweisenden Transportförderer zum Fördern der Geflügelkarkasse in eine Transportrichtung T, ein Schneidmittel zum Trennen des Brustknorpels oder Teilen davon von der Geflügelkarkasse und eine Steuereinrichtung zum Steuern des Schneidmittels. Des Weiteren betrifft die Erfindung ein Verfahren zum vollständigen Lösen zumindest eines Teils des Brustknorpels von einer vom Brustfleisch befreiten Geflügelkarkasse.

Solche Vorrichtungen und Verfahren kommen insbesondere in der Fleisch und Geflügel verarbeitenden Industrie zum Einsatz. Aus dem Stand der Technik bzw. genauer aus der Praxis sind Vorrichtungen bzw. Verfahren mit den Merkmalen der Oberbegriffe der Ansprüche 1 bzw. 13 bekannt. Bei der Verarbeitung von Fleisch/Geflügel werden zunächst die für die Produktion von Nahrungsmitteln relevanten Fleischteile von der Geflügelkarkasse gelöst und diese abgelösten Fleischteile anschließend weiteren Bearbeitungsstationen manuell oder automatisch innerhalb einer Bearbeitungslinie zugeführt. Dabei wird insbesondere zunächst das Brustfleisch von der Geflügelkarkasse abgelöst, die Geflügelkarkasse also vom Brustfleisch befreit. Die vom Brustfleisch befreite Geflügelkarkasse umfasst im Wesentlichen einen Geflügelkörper mit den entsprechenden Knochenteilen, wie Rippen bzw. Rippenbögen, Brustbein (Sternum), eine zwischen den Rippen bzw. Rippenbögen liegende Geflügelkarkassenhaut, die Bestandsteil der gesamten Geflügelkarkasse ist, und den mit dem Brustbein verbundenen Brustknorpel. Anders ausgedrückt bildet der Brustknorpel eine Art Fortsatz des Brustbeins.

Aufgrund der wirtschaftlichen Bedeutung des Brustknorpels als Rohstoff, beispielsweise für die pharmazeutische und kosmetische Industrie, besteht ein Interesse daran, den Brust-knorpel von der restlichen Geflügelkarkasse abzutrennen und separat zu sammeln. Gemäß der bekannten Vorrichtung zur Abtrennung des Brustknorpels wird die Geflügelkarkasse auf einem Stützkörper eines Transportförderers fixiert und zu den einzelnen Bearbeitungsstationen, u.a. einem Schneidelement befördert. Mittels des Schneidelementes erfolgt zumindest eine teilweise Trennung von Brustknorpel und Brustbein, so dass der Brustknorpel in einer weiteren Bearbeitungsstation durch manuelles oder automatisches Eingreifen, beispielsweise durch Reißen noch vorhandener Verbindungen zwischen Brustknorpel und Geflügelkarkasse, endgültig abgetrennt werden kann.

Derartige Verfahren und Vorrichtungen weisen jedoch den Nachteil auf, dass beim Trenn- bzw. Abreißvorgang neben dem eigentlichen Brustknorpel Teile des knöchernen Brustbeins oder Teile der Geflügelkarkasse am Brustknorpel verbleiben. Die von der Geflügelkarkasse abgetrennten Teile bestehen folglich nicht ausschließlich bzw. zu einem überwiegenden Anteil aus dem eigentlichen Brustknorpel, sondern enthalten einen unerwünscht hohen Anteil weiterer Bestandteile. Aufgrund der im Vergleich zu den Knochenbestandteilen der Geflügelkarkasse relativ geringen Dichte des Brustknorpelmaterials wirken sich diese am Brustknorpel verbleibende Restteile der Geflügelkarkasse und/oder des Brustbeins besonders negativ hinsichtlich des Reinheitsgrades der abgetrennten Brustknorpel aus, wobei dieser das Massenverhältnis zwischen tatsächlichem Brustknorpelmaterialanteil und Fremdmaterial definiert.

Das Dokument US2010/081366 offenbart eine Vorrichtung, ausgebildet und eingerichtet zum vollständigen Lösen zumindest eines Teils des Brustknorpels von einer vom Brustfleisch befreiten Geflügelkarkasse, umfassend einen zumindest einen Stützkörper zum Aufnehmen und Fixieren der Geflügelkarkasse aufweisenden Transportförderer zum Fördern der Geflügelkarkasse in eine Transportrichtung, ein Schneidmittel zum Trennen des Brustknorpels oder Teilen davon von der Geflügelkarkasse und eine Steuereinrichtung zum Steuern des Schneidmittels,
wobei der Transportförderer mit jedem Stützkörper derart ausgerichtet und angetrieben ist, dass eine auf dem Stützkörper anzuordnende Geflügelkarkasse mit ihrer Verbindungslinie zwischen dem Brustbein und dem Brustknorpel parallel zu der Transportrichtung orientiert ist,
wobei das Schneidmittel zum Längseinschneiden der Geflügelkarkasse zumindest entlang eines Teilabschnitts beidseits des Brustknorpels ausgebildet und eingerichtet ist,
und wobei das Schneidmittel zum Querschneiden eines Verbindungsbereiches zwischen dem Brustknorpel und dem Brustbein unter vollständiger Ablösung des Brustknorpels von der Geflügelkarkasse ausgebildet und eingerichtet ist.

Es ist daher Aufgabe der vorliegenden Erfindung, eine Vorrichtung zu schaffen, die ein zuverlässiges und präzises Abtrennen des Brustknorpels von der Geflügelkarkasse gewährleistet. Des Weiteren ist es Aufgabe der vorliegenden Erfindung, ein entsprechendes Verfahren vorzuschlagen.

Diese Aufgabe wird durch eine Vorrichtung mit den eingangs genannten Merkmalen dadurch gelöst, dass der Transportförderer mit dem oder jedem Stützkörper derart ausgerichtet und angetrieben ist, dass eine auf dem Stützkörper anzuordnende Geflügelkarkasse mit ihrer Verbindungslinie zwischen dem Brustbein und dem Brustknorpel parallel zu der Transportrichtung T orientiert ist, das Schneidmittel ein Doppelmesser umfasst, das zum Längseinschneiden der Geflügelkarkasse zumindest entlang eines Teilabschnitts beidseits des Brustknorpels und/oder beidseits des Brustbeins ausgebildet und eingerichtet ist, und das Schneidmittel ein dem Doppelmesser nachgeordnetes Trennelement umfasst, das zum Querschneiden eines Verbindungsbereiches zwischen dem Brustknorpel und dem Brustbein unter vollständiger Ablösung des Brustknorpels von der Geflügelkarkasse ausgebildet und eingerichtet ist. Durch die Orientierung der Geflügelkarkasse bezüglich der Verbindungslinie zwischen Brustbein und dem Brustknorpel der Geflügelkarkasse in paralleler Richtung zu der Transportrichtung T in Verbindung mit dem Doppelmesser ist es möglich, die Geflügelkarkasse seitlich des Brustknorpels präzise mit einem doppelten Längsschnitt zu versehen. Das erfindungsgemäße Doppelmesser ermöglicht in einer Art Vorschnitt das Trennen des Brustknorpels von der Geflügelkarkasse gleichzeitig zu beiden Seiten des Brustknorpels. Mit anderen Worten ist das Doppelmesser zum Längsschneiden auf beiden Seiten des Brustknorpels ausgebildet, so dass die Geflügelkarkasse beidseits, d.h. unmittelbar im Grenzbereich zwischen Brustknorpel und Geflügelkarkasse, vollständig eingeschnitten wird. Durch diesen Vorschnitt wird unerwünschtes Material seitlich des Brustknorpels zuverlässig abgetrennt, ohne jedoch den Brustknorpels bereits vollständig von der Geflügelkarkasse zu lösen. Die (Quer-)Verbindung zwischen dem Brustknorpel und dem Brustbein bleibt zunächst unversehrt und stellt folglich nach dem Längseinschnitt die einzig noch bestehende Verbindung des Brustknorpels mit dem Brustbein dar. Zur endgültigen Trennung des Brustknorpels oder Teilen davon ist das erfindungsgemäße Trennelement vorgesehen, das in Transportrichtung T hinter dem Doppelmesser angeordnet ist. Die erfindungsgemäße Ausbildung der Vorrichtung ermöglicht das vollautomatische und zuverlässige Trennen des Brustknorpels (oder Teilen davon) von der Geflügelkarkasse, wobei das Brustbein an der Geflügelkarkasse verbleiben kann.

Eine zweckmäßige Ausgestaltung der Erfindung ist dadurch gekennzeichnet, dass das Doppelmesser aus einer Warteposition in eine Schneidposition und zurück bewegbar angeordnet ist. Mit anderen Worten ist das Doppelmesser gemäß dieser zweckmäßigen Ausgestaltung der Erfindung nicht feststehend ausgebildet, sondern zwischen der Warteposition und der Schneidposition hin und her bewegbar. In der Warteposition kommt das Doppelmesser nicht in Eingriff mit der Geflügelkarkasse bzw. dieses ist so positioniert, dass eine Berührung des Doppelmessers mit der Geflügelkarkasse sicher vermieden wird. Zum Längseinscheiden der Geflügelkarkasse wird das Doppelmesser in die Schneidposition bewegt, in der das Doppelmessers mit der Geflügelkarkasse in Eingriff gelangt, so dass das Doppelmesser in die Geflügelkarkasse eindringen kann. Auf diese Weise lassen sich Schnittbeginn und/oder Schnittende und somit die Schnittlänge der Längsschnitte präzise und exakt steuern. Bevorzugt ist das Doppelmesser nach dem Bewegen in die Schneidposition zumindest während des Vorgangs des Längseinschneidens ortfest, d.h. das Doppelmesser verharrt während des Schneidvorgangs in ein- und derselben Position.

Bevorzugt erfolgt das Längseinschneiden der Geflügelkarkasse zumindest entlang des Teilabschnitts beidseits des Brustknorpels und/oder beidseits des Brustbeins. Dies ist besonders vorteilhaft, da die Schnittlänge der Längsschnitte frei wählbar variiert werden kann. So ist es einerseits möglich, die Schnittlänge der Längsschnitte an die anatomischen Gegebenheiten der Geflügelkarkasse optimal anzupassen. Andererseits ist durch die Festlegung der Schnittlänge die Größe eines Verbindungssteges variierbar, über den der Brustknorpel bzw. das Brustbein mit der Geflügelkarkasse nach dem Längseinscheiden verbunden ist. Je größer dieser Bereich ausfällt, d.h. je kürzer der durch das Doppelmesser verursachte Längsschnitt ist, desto fester ist die weiterhin bestehende seitliche Verbindung zwischen dem Brustknorpel bzw. dem Brustbein und der Geflügelkarkasse und umgekehrt.

Durch die Wahl einer entsprechenden Schnittlänge des mittels des Doppelmessers durchgeführten Doppelschnitts lässt sich sicherstellen, dass eine durch das nachgeordnete Trennmesser auf den Verbindungsbereich zwischen dem Brustknorpel und dem Brustbein einwirkende Kraft nicht zu einem unkontrollierten Ein- oder Abreißen der Verbindungsstege im seitlichen Teilbereich zwischen dem Brustbein bzw. dem Brustknorpel und der Geflügelkarkasse führt, was in Summe einen erhöhten Fremdmaterialanteil am Brustknorpel und folglich einen geringeren Reinheitsgrad des abgetrennten Brustknorpels zur Konsequenz hätte.

Die Schnittlänge ist vorzugsweise jedoch mindestens so lang gewählt, dass beim anschließenden Querschneiden mittels des Trennelements keine Teile des Brustbeins am Brustknorpel verbleiben. So wird eine zuverlässige und exakte Abtrennung des Brustknorpels von der Geflügelkarkasse erzielt, ohne dass unerwünschte Restteile der Geflügelkarkasse nach dem vollständigen Lösen des Brustknorpels von der Geflügelkarkasse an dem abgetrennten Brustknorpel verbleiben.

Das Längseinschneiden erfolgt daher im Wesentlichen durch die mittels des Transportförderers in Transportrichtung T relativ zu dem in der Schneiposition befindlichen Doppelmesser bewegte Geflügelkarkasse. Mit anderen Worten ist das Doppelmesser in der Schneidposition ortsfest, während die Geflügelkarkasse relativ dazu in Transportrichtung T an dem Doppelmesser vorbeibewegt wird. So wird die ohnehin erforderliche Bewegung der Geflügelkarkasse zum Fördern derselben in die Transportrichtung T zugleich zu dem Längseinschneiden der Geflügelkarkasse genutzt. Alternativ ist es auch möglich, dass Doppelmesser in der Schneidposition in oder entgegen der Transportrichtung T bewegbar auszubilden, so dass das Längseinschneiden durch die Bewegung des Doppelmessers entgegen der Transportrichtung T das Längseinschneiden zusätzlich unterstützt wird. Gemäß dieser Alternative kann das Längseinschneiden der Geflügelkarkasse auch bei vorübergehendem Stillstand des Transportförderers erfolgen. Selbstverständlich ist es auch möglich, das Doppelmesser ausschließlich in eine Richtung senkrecht zur Transportrichtung T an die Geflügelkarkasse heranzubewegen.

Eine bevorzugte Weiterbildung der Erfindung zeichnet sich dadurch aus, dass das Doppelmesser zumindest zwei voneinander beabstandete Einzelmesser umfasst, wobei die Einzelmesser zumindest im Wesentlichen parallel zueinander ausgerichtet sind. Mittels der Einzelmesser wird die Geflügelkarkasse in einem einzigen Arbeitsgang beidseitig mit den Längsschnitten versehen. Die parallele Ausrichtung der Einzelmesser garantiert ein symmetrisches Schnittbild bezüglich der eine Symmetrieebene bildenden Verbindungslinie zwischen dem Brustknorpel und dem Brustbein. Selbstverständlich können die Einzelmesser auch zueinander geneigt angeordnet sein.

Gemäß einer weiter bevorzugten Ausbildung der Erfindung ist der Abstand der Einzelmesser einstellbar, so dass der Abstand der Einzelmesser an die anatomischen Gegebenheiten der Geflügelkarkasse, beispielsweise die Breite des Brustbeins bzw. des Brustknorpels, optimal anzupassen ist.

Eine weitere zweckmäßige Ausbildung der Erfindung ist dadurch gekennzeichnet, dass dem Doppelmesser eine korrespondierende Gegenlage zugeordnet ist. Mittels der Gegenlage wird eine exakte und präzise Schnittführung beim Längseinschneiden durch das Doppelmesser gewährleistet, indem ein Ausweichen bzw. Auswölben der Geflügelkarkasse beim Längseinschneiden sicher vermieden wird. Ein weiterer Vorteil der Gegenlage besteht darin, dass indirekt die Standzeit des Doppelmessers erhöht werden kann, bevor dieses aufgrund von Abnutzungserscheinungen an Schärfe verliert und ausgetauscht werden muss. Aufgrund der Gegenlage wird ein Einreißen beim Vorgang des Längseinschneidens auch bei bereits stumpfem Doppelmesser zuverlässig vermieden.

Gemäß einer weiteren bevorzugten Ausführungsform ist die Gegenlage integraler Bestandteil des Stützkörpers. Dies ermöglicht eine besonders kompakte und einfache Ausbildung der Gegenlage, da die Gegenlage als eine korrespondieren Ausnehmung unmittelbar in den die Geflügelkarkasse fixierenden Stützkörper integriert ist.

Eine weitere zweckmäßige Ausgestaltung der Erfndung ist dadurch gekennzeichnet, dass das Trennelement aus einer Warteposition in eine Trennposition und zurück bewegbar angeordnet ist. Auf diese Weise kann präzise festgelegt werden, an welcher exakten Stelle der Verbindungsbereich zwischen dem Brustknorpel und dem Brustbein getrennt werden soll. In der Warteposition kommt das Trennelement nicht mit dem Verbindungsbereich zwischen dem Brustbein und dem Brustknorpel in Berührung. Sobald die Getlügelkarkasse soweit mittels des Transportförderers in die Transportrichtung T gefördert worden ist, dass der Verbindungsbereich zwischen dem Brustbein und dem Brustknorpel in einer geeignete Trennposition zum vollständigen Ablösen des Brustknorpels von der Geflügelkarkasse positioniert ist, wird das Trennelement durch eine Art "Hackbewegung" aus der Warteposition in die Trerinposition bewegt. In der Trennposition kommt das Trennelement mit dem Verbindungsbereich zwischen dem Brustknorpel und dem Brustbein in Eingriff, so dass dieser Verbindungsbereich durch Querschneiden durchtrennt wird.

Eine weitere zweckmäßige Ausgestaltung der Erfindung ist dadurch gekennzeichnet, dass das Trennelements derart bewegbar angeordnet ist, dass das Trennelement beim Bewegen aus der Warteposition in die Trennposition eine zur Transportrichtung T senkrechte Bewegungsrichtung aufweist. Dies ist besonders vorteilhaft, da die Schnittgeschwindigkeit beim Querschneiden des Verbindungsbereiches zwischen dem Brustknorpel und dem Brustbein unabhängig von der Transportgeschwindigkeit des Transportförderers T ist.

Gemäß einer weiteren vorteilhaften Ausgestaltung der Erfindung ist das Trennelement derart bewegbar angeordnet ist, dass das Trennelement beim Bewegen aus der Warteposition in die Trennposition eine in die Transportrichtung T gerichtete Bewegungsrichtung aufweist, die um einen Winkel α gegenüber einer Senkrechten zu der Transportrichtung T geneigt ist. Der Winkel α umfasst bevorzugt einen Bereich von 0 < α < 90°. Dies bietet den Vorteil, dass das Quereinschneiden mittels des Trennelements zumindest mit einer Teilkomponente in Richtung der Transportrichtung T erfolgt. Das Trennelement wird also beim Bewegen aus der Warteposition in die Trennposition mindestens bezüglich einer Teilkomponente in Richtung der Transportrichtung T bewegt. Aufgrund dieser Mitbewegung wird ein Abbremsen der Geflügelkarkasse bzw. ein dadurch möglicherweise verursachtes Verrutschten auf dem Stützkörper vermieden. Weiter werden die auf das Trennelement in Transportrichtung T aufgrund der Weiterbewegung der Geflügelkarkasse einwirkenden Kraftkomponenten weitestgehend minimiert.

Vorteilhafterweise ist das Trennelement schwenkbar um eine Drehachse D angeordnet. Dies bietet den Vorteil, dass der beim Querschneiden des Verbindungsbereichs zwischen dem Brustknorpel und dem Brustbein entstehende Schnittverlauf im Wesentlichen kreisbogenförmig ist. So tritt das Trennelement beim Schwenken um die Drehachse D zunächst im Wesentlichen senkrecht in den Verbindungsbereich ein, d.h. das Trennelement weist zu Beginn des Quereinschneidens ausschließlich eine Komponente senkrecht zu der Transportrichtung T auf. Im Verlauf der weiteren Schwenkbewegung nimmt diese Komponente in Transportrichtung T aufgrund der Schwenkbewegung weiter zu. Mit anderen Worten ändert sich der Winkel α gegenüber einer Senkrechten zu der Transportrichtung T kontinuierlich mit der Schwenkbewegung. Durch die kontinuierliche Veränderung des Winkels α erhöht sich vorteilhafterweise mit fortschreitendem Querschneiden auch die Geschwindigkeitskomponente des Trennelements in die Transportrichtung T. Mit anderen Worten wandert das Trennelement mit der Geflügelkarkasse mit, wobei sich mit tieferem Eindringen des Trennelements in den Verbindungsbereich auch die Geschwindigkeitskomponente des Trennelements in die Transportrichtung T kontinuierlich erhöht. Auf diese Weise wird ein Abbremsen der Geflügelkarkasse und folglich ein mögliches Verrutschen oder Stauchen der Geflügelkarkasse auf dem Stützkörper zuverlässig vermieden und eine präzise und exakte Schnittführung gewährleistet.

Des Weiteren wird die Aufgabe durch ein entsprechendes Verfahren gelöst, umfassend die Schritte: Transportieren der Geflügelkarkasse in eine Transportrichtung T mittels eines mindestens einen Stützkörper zum Aufnehmen und Fixieren der Geflügelkarkasse aufweisenden Transportförderers, derart, dass eine Verbindungslinie zwischen dem Brustbein und dem Brustknorpel der Geflügelkarkasse parallel zu der Transportrichtung T orientiert ist, Längseinschneiden der Geflügelkarkasse zumindest entlang eines Teilabschnitts beidseits des Brustknorpels und/oder beidseits des Brustbeins mittels eines Doppelmessers, und anschließendes Querschneiden eines Verbindungsbereiches zwischen dem Brustknorpel und dem Brustbein unter vollständiger Ablösung des Brustknorpels von der Geflügelkarkasse mittels eines Trennelementes. Die sich daraus ergebenden Vorteile wurden bereits im Zusammenhang mit der Vorrichtung beschrieben. Zur Vermeidung von Wiederholungen wird deshalb auf die entsprechenden Passagen der Beschreibung verwiesen.

Weitere bevorzugte und/oder zweckmäßige Merkmale und Ausführungsformen sowie Verfahrensschritte ergeben sich aus den Unteransprüchen und der Beschreibung. Eine besonders bevorzugte Ausführungsform sowie das Verfahren werden anhand der beigefügten Zeichnung näher erläutert. Die Zeichnung zeigt:
- Fig. 1: eine schematische Darstellung der erfindungsgemäßen Vorrichtung in Seitenansicht,
- Fig. 2: eine Schnittdarstellung der Vorrichtung in Fig.1 gemäß Schnitt A-A,
- Fig. 3: eine vergrößerte Darstellung des Schnitts A-A der Fig. 2 von Teilen des Schneidmittels und des Stützkörpers mit einer zu dem Doppelmesser korrespondierenden Gegenlage,
- Fig. 4: eine Schnittdarstellung der Vorrichtung in Fig. 1 gemäß Schnitt B-B,
- Fig. 5: eine Darstellung gemäß Fig. 1 in Vorderansicht, und
- Fig. 6: eine Darstellung gemäß Fig. 1 in Draufsicht.

Die in den Figuren dargestellte Vorrichtung dient zum automatischen Trennen der Brustknorpel oder Teilen davon von einer Geflügelkarkasse. Die Vorrichtung kann als Einzelmaschine oder als integraler Bestandteil einer Verarbeitungslinie eingesetzt werden.

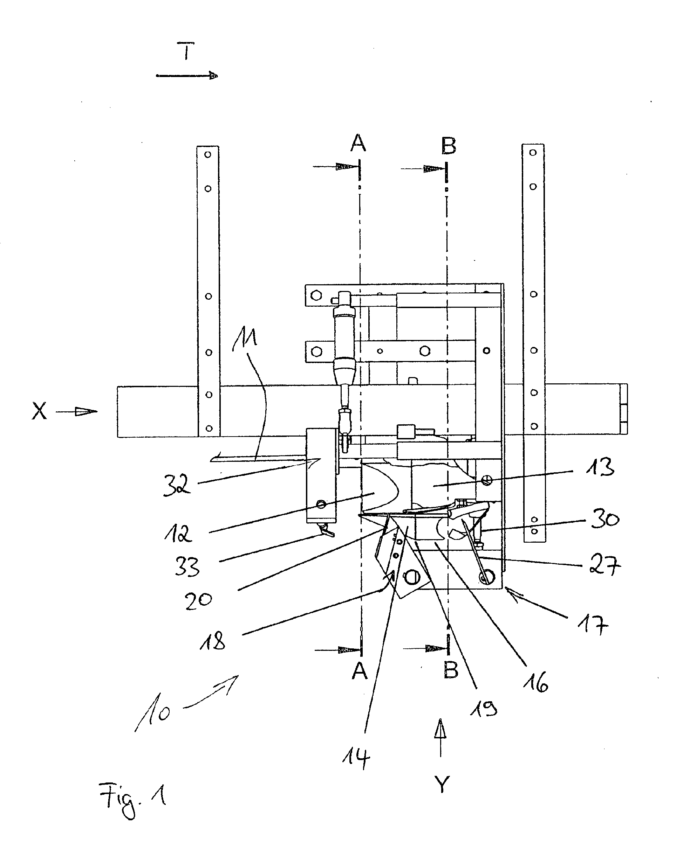

Die Figur 1 zeigt eine schematische Darstellung der Vorrichtung 10 in Seitenansicht. Die Vorrichtung 10 umfasst im Wesentlichen einen Transportförderer 11 mit mindestens einem Stützkörper 12, der zum Aufnehmen und Fixieren einer Geflügelkarkasse 13 ausgebildet ist. Üblicherweise ist der Transportförderer 11 eine umlaufende Transportkette mit mehreren Stützkörpern 12. Andere übliche Ausbildungen des Transportförderers 11 sind aber ebenfalls einsetzbar. Mittels des Transportförderers 11 wird die auf dem Stützkörper 12 fixierte Geflügelkarkasse 13 in eine Transportrichtung (gemäß Pfeil T) gefördert, und zwar entlang eines Schneidmittels 17, das ebenfalls Bestandteil der erfindungsgemäßen Vorrichtung 10 ist. Das Schneidmittel 17 umfasst erfindungsgemäß ein Doppelmesser 18 und ein Trennelement 27, das in Transportrichtung T hinter dem Doppelmesser 18 angeordnet ist.

Die Geflügelkarkasse 13 ist zur Verarbeitung so auf dem Stützkörper 12 angeordnet, dass eine Verbindungslinie zwischen Brustbein 16 und dem Brustknorpel 14 der Geflügelkarkasse 13 parallel zu der Transportrichtung T orientiert ist. Anders ausgedrückt verläuft die Verbindungslinie in der gleichen Richtung wie die Transportrichtung T.

Beim Fördern der Geflügelkarkasse 13 passiert diese das Schneidmittel 17 zum Trennen des Brustknorpels 14 oder Teilen davon von der Geflügelkarkasse 13. Das Trennen des Brustknorpels 14 von der Geflügelkarkasse 13 erfolgt in zwei Schritten. Zunächst durch Längseinschneiden der Geflügelkarkasse 13 beidseits des Brustknorpels 14 und/oder beidseits des Brustbeins 16 mittels des Doppelmessers 18 und anschließendem Querschneiden eines Verbindungsbereichs 19 bzw. des von den Längsschnitten stehen gelassenen Querstegs zwischen dem Brustknorpel 14 und dem Brustbein 16 mittels des Trennelementes 27.

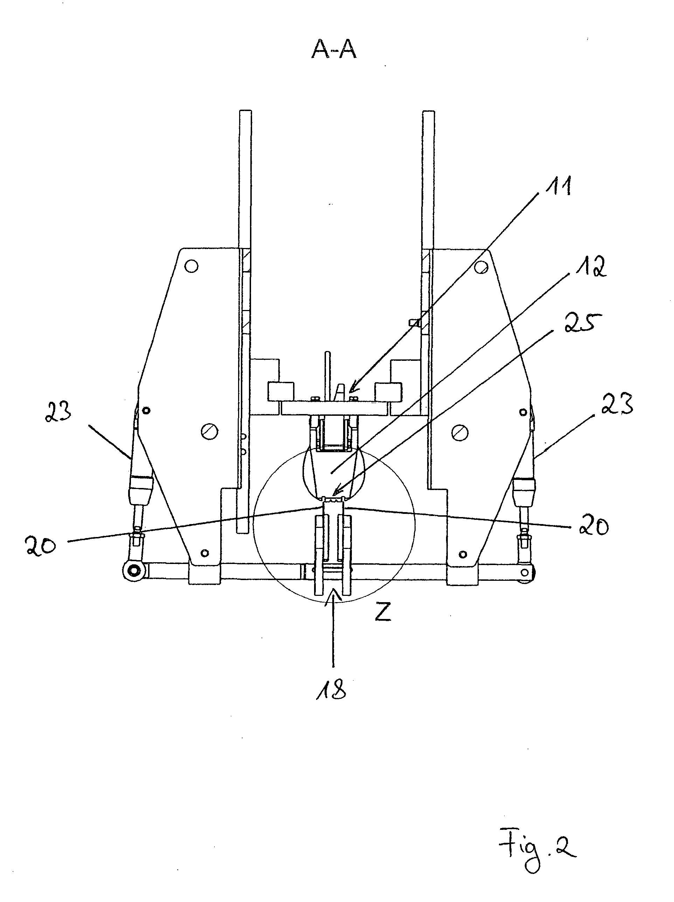

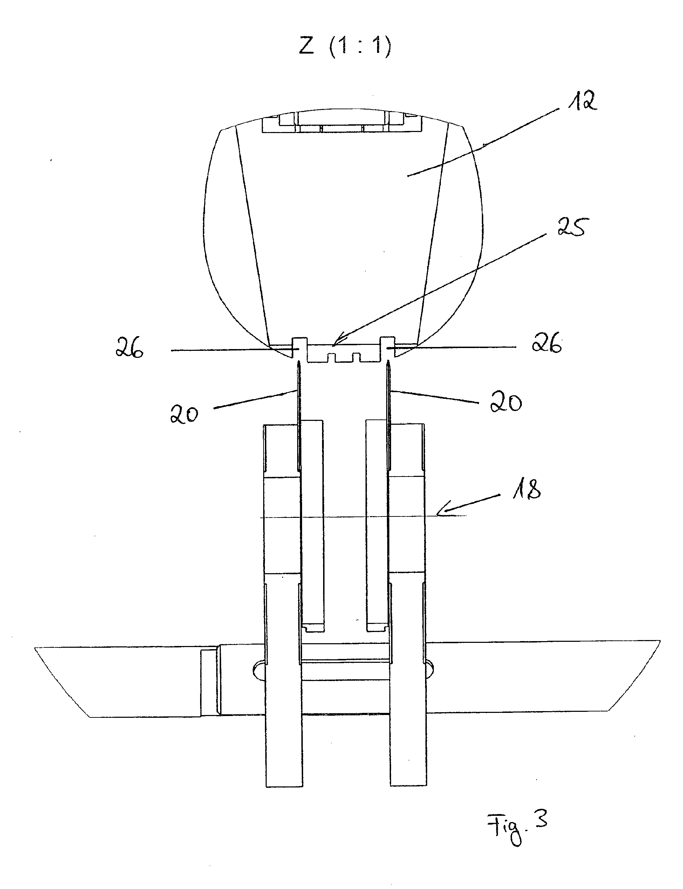

Details des Schneidmittels 17 bezüglich des Doppelmessers 18 ergeben sich insbesondere aus den Figuren 2 und 3. Gemäß einer bevorzugten Ausführungsform der Erfindung umfasst das Doppelmesser 18 zumindest zwei voneinander beabstandete Einzelmesser 20, die parallel zueinander ausgerichtet sind. Passiert die auf dem Stützkörper 12 fixierte und in die Transportrichtung T vom Transportförderer 11 geförderte Geflügelkarkasse 13 das Doppelmesser 18, wird die Geflügelkarkasse 13 mittels der beiden Einzelmesser 20 beidseits des Brustknorpels 14 und/oder beidseits des Brustbeins 16 in Längsrichtung, d.h. parallel zu der Transportrichtung T, entlang des Brustknorpels 14 und/oder des Brustbeins 16 eingeschnitten. Wie zuvor ausgeführt, können sich die Längseinschnitte über einen Teilabschnitt beliebiger Länge erstrecken.

Bei den Einzelmessern 20 handelt es sich vorzugsweise um stehende Messer, deren Schnittkanten wie in der Fig. 1 gezeigt gegenüber der Senkrechten zu der Transportrichtung T geneigt angeordnet sind. Alternativ sind die Schnittkanten nicht wie in der Zeichnung gezeigt gegenüber der Senkrechten zur Transportrichtung T geneigt, sondern zumindest im Wesentlichen parallel zu der Transportrichtung T ausgerichtet, also entweder parallel zu der Transportrichtung T oder um einen Winkelbetrag kleiner 90° gegenüber der Transportrichtung T geneigt angeordnet. Gemäß einer weiteren bevorzugten Ausbildung der Erfindung sind die Einzelmesser 20 als Kreismesser ausgebildet, die besonders bevorzugt rotierend angetrieben werden. Der Drehsinn der Kreismesser ist in diesem Fall vorzugsweise entgegen der Transportrichtung T gerichtet.

Gemäß einer weiteren bevorzugten Ausbildung der Erfindung ist der Abstand der Einzelmesser 20 einstellbar. Mit anderen Worten lässt sich der Abstand zwischen den beiden Einzelmesser 20 variieren, um diesen an die anatomischen Gegebenheiten der zu bearbeitenden Geflügelkarkasse 13 anzupassen. Die Verstellung des Abstands zwischen den Einzelmessern 20 kann nicht nur manuell erfolgen, sondern bevorzugt adaptiv während des Betriebs der Vorrichtung 10, so dass der Abstand der Einzelmesser 20 individuell an die jeweilig zu bearbeitende Geflügelkarkasse 13 angepasst werden kann, um eine möglichst dicht anliegende Schnittführung seitlich des Brustknorpels 14 und/oder des Brustbeins 16 zu erzielen. Selbstverständlich ist eine derartige individuelle Anpassung des Abstands der Einzelmesser 20 auch beim Einsatz von Kreismessern als Einzelmesser 20 möglich. Die Einzelmesser 20 sind ferner parallel zueinander ausgerichtet. Gemäß einer alternativen Ausführung sind die Einzelmesser 20 nicht parallel zueinander ausgerichtet, sondern entsprechend zueinander geneigt. Dabei können die Einzelmesser 20 zueinander schräg gestellt angeordnet sein, so dass die Schnittkanten der Einzelmesser 20 nicht im rechten Winkel mit der Geflügelkarkasse 13 zum Eingriff kommen, sondern jeweils geneigt dazu eingreifen. Anders ausgedrückt können die Einzelmesser 20 derart angeordnet sein, dass diese eine horizontale Ebene nicht ausschließlich im rechten Winkel schneiden, sondern unter beliebigen anderen Winkeln. Eine nicht parallele Anordnung der Einzelmesser 20 umfasst auch eine Ausrichtung der Einzelmesser 20, bei der die Einzelmesser 20 nicht parallel zur Transportrichtung T sind, sondern um einen beliebigen Winkelbetrag gegenüber der Transportrichtung T geneigt angeordnet sind. In diesem Fall bilden die Einzelmesser 20 einen sich in Transportrichtung T erweiternden bzw. sich verjüngenden Spalt.

Zum Längseinschneiden der Geflügelkarkasse 13 ist das Doppelmesser 18 aus einer Warteposition in eine Schneidposition und zurück bewegbar angeordnet. Sobald die von dem Transportförderer 11 in die Transportrichtung T geförderte Geflügelkarkasse 13 das Doppelmesser 18 passiert, wird das Doppelmesser 18 aus der Warteposition in die Schneidposition bewegt. Das Doppelmesser 18 befindet sich für die Dauer des Längseinschneidens der Geflügelkarkasse 13 in der Schneidposition. Die Verweildauer des Doppelmessers 18 in der Schneidposition ergibt sich aus der gewünschten Schnittlänge der Längsschnitte sowie einer Fördergeschwindigkeit des Transportförderers 11, mit der die Geflügelkarkasse 13 in die Transportrichtung T gefördert wird. Ist die gewünschte Schnittlänge der Längsschnitte erreicht, wird das Doppelmesser 18 anschließend wieder zurück in die Warteposition bewegt. Zum Bewegen des Doppelmessers 18 aus der Warteposition in die Schneidposition und zurück ist dem Doppelmesser 18 ein Stellelement 23 zugeordnet. Hierbei handelt es sich vorzugsweise um einen Pneumatikzylinder, eine servomotorischen Antrieb oder dergleichen.

Das Stellelement 23 ist vorzugsweise mit einer (nicht explizit dargestellten) Steuereinrichtung verbunden, die den zeitlichen Ablauf, nämlich das Bewegen des Doppelmesser 18 in Abhängigkeit einer Position des in Transportrichtung T geförderten Stützkörpers 12 mit der Geflügelkarkasse 13 aus der Warteposition in die Schneidposition und zurück steuert und zu gegebenen Zeitpunkten die entsprechenden Bewegungen des Doppelmesser 18 veranlasst. Die Steuereinrichtung umfasst zumindest ein Messmittel zur Positionsbestimmung der Geflügelkarkasse 13. Beispielsweise erfolgt die Positionsbestimmung der Geflügelkarkasse 13 durch das Messmittel beim Einlauf der Geflügelkarkasse 13 in die Vorrichtung 10. Auf Basis der Transportgeschwindigkeit des Transportförderers 11 und den bekannten Strecken zwischen Messmittel und dem Schneidmittel 17 ermittelt die Steuereinrichtung unter Berücksichtung der geforderten Länge der Längsschnitte die Zeitpunkte, zu denen das Doppelmesser 18 aus der Warteposition in die Schneidposition und zurück zu bewegen ist.

Eine weitere zweckmäßige Ausbildung der Erfindung ist dadurch gekennzeichnet, dass dem Doppelmesser 18 eine korrespondierende Gegenlage 25 zugeordnet ist. Die Gegenlage 25 weist korrespondierend zu dem Doppelmesser 18 zwei Ausnehmungen 26 auf. Die Ausnehmungen 26 sind mindestens so breit wie die Klingenbreite der Einzelmesser 20 gewählt. Besonders bevorzugt ist die Breite der Ausnehmungen 26 jedoch größer als die Klingenbreite der Einzelmesser 20 gewählt, so dass die Einzelmesser 20 keinesfalls mit der Gegenlage 25 in Berührung kommen. Auf diese Weise lässt sich der Abstand der Einzelmesser 20 variieren, ohne dass eine Begrenzung durch die Gegenlage 25 erfolgt. Besonders bevorzugt ist die Gegenlage 25 integraler Bestandteil des Stützkörpers 12.

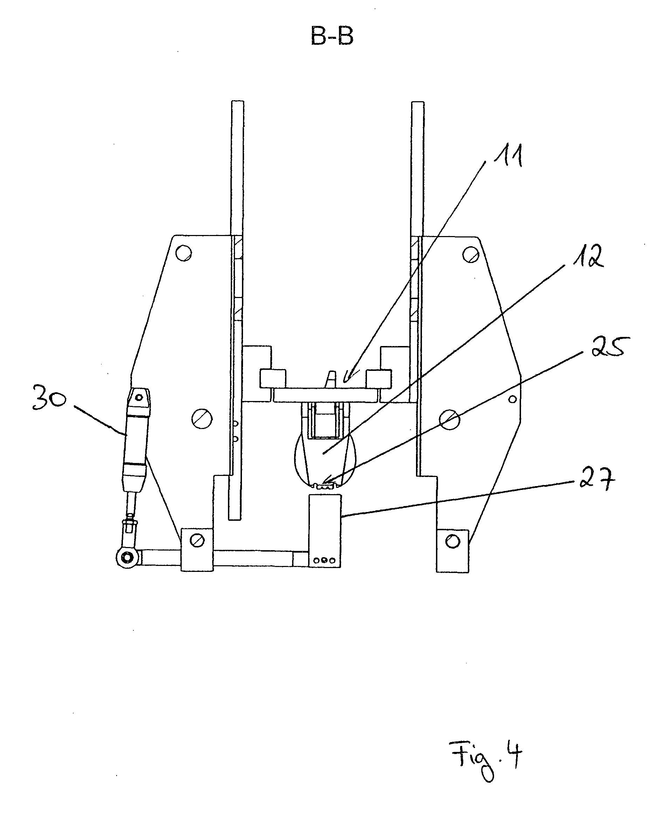

Im Anschluss an das Längseinschneiden der Geflügelkarkasse 13 passiert diese das dem Doppelmesser 18 nachgeordnete Trennelement 27. Details des Trennelements 27 sind insbesondere der Figur 4 zu entnehmen. Zum Querschneiden des Verbindungsbereichs 19 zwischen dem Brustknorpel 14 und dem Brustbein 16 ist das Trennelement 27 aus einer Warteposition in eine Trennposition und zurück bewegbar angeordnet. Unter Querschneiden wird hierbei verstanden, den Verbindungsbereich 19 im Wesentlichen senkrecht bzw. mit einer senkrechten Komponente zu der Verbindungslinie zwischen Brustknorpel 14 und Brustbein 16 zu durchtrennen. Dabei umfasst das Querschneiden auch eine Schnittführung, die gegenüber der Verbindungslinie um einen beliebigen Winkel kleiner 90° einschließt.

Sobald die von dem Transportförderer 11 in die Transportrichtung T geförderte Geflügelkarkasse 13 das Trennelement 27 passiert, wird das Trennelement 27 aus der Warteposition in die Trennposition bewegt. Das Trennelement 27 befindet sich für die Dauer des Quereinscheidens des Verbindungsbereichs 19 in der Trennposition. Dabei umfasst die Trennposition einen Bereich, der sich zumindest von einem Punkt aus erstreckt, an dem das Trennelement 27 erstmals mit dem Verbindungsbereich 19 in Eingriff kommt, bis zu demjenigen Punkt, an dem das Trennelement 27 den Verbindungsbereich 19 abschließend durchtrennt und so den Brustknorpel 14 von der Geflügelkarkasse 13 vollständig abgetrennt. Anders ausgedrückt erfolgt das Querschneiden vorzugsweise in dem Verbindungsbereich 19 derart, dass die beim Längseinschneiden durch das Doppelmesser 18 in der Geflügelkarkasse 13 erzeugten Längsschnittlinien beim Bewegen des Trennelements 27 in die Trennposition gekreuzt werden, so dass der Brustknorpel 14 vollständig und endgültig von der Geflügelkarkasse 13 freikommt. Das Trennelement 27 führt zum Trennen eine Art Hackbewegung aus.

Zum Bewegen des Trennelements 27 aus der Warteposition in die Trennposition und zurück ist dem Trennelement 27 ein Stellelement 30 zugeordnet. Hierbei handelt es sich vorzugsweise um einen Pneumatikzylinder, eine servomotorischen Antrieb oder dergleichen. Das Stellelement 30 ist vorzugsweise wie das Stellelement 23 des Doppelmesser 18 mit der Steuereinrichtung verbunden, die den zeitlichen Ablauf, nämlich das Bewegen des Trennelements 27 in Abhängigkeit einer Position des in Transportrichtung T geförderten Stützkörpers 12 mit der Geflügelkarkasse 13 von der Warteposition in die Trennposition und zurück steuert und zu gegebenen Zeitpunkten die entsprechenden Bewegungen des Trennelements 27 veranlasst.

Die vorstehenden Ausführungen zur zeitlichen Steuerung des Doppelmessers 18 gelten in analoger Weise für die zeitliche Steuerung des Trennelements 27, das jedoch aufgrund des größeren Abstands zwischen dem am Einlauf der Vorrichtung 10 angeordneten Messmittel zeitlich entsprechend später als das Doppelmesser 18 anzusteuern ist. Alternativ umfasst die Steuereinrichtung mehrere Messmittel zur Positionsbestimmung der Geflügelkarkasse 13, die jeweils sowohl dem Doppelmesser 18 als auch dem Trennelement 27 zugeordnet sein können.

Eine weitere zweckmäßige Ausgestaltung der Erfindung ist dadurch gekennzeichnet, dass das Trennelement 27 derart bewegbar angeordnet ist, dass das Trennelement 27 beim Bewegen aus der Warteposition in die Trennposition eine zur Transportrichtung T senkrechte Bewegungsrichtung aufweist. Gemäß einer weiteren vorteilhaften Ausgestaltung der Erfindung ist das Trennelement 27 derart bewegbar angeordnet ist, dass das Trennelement 27 beim Bewegen aus der Warteposition in die Trennposition eine in die Transportrichtung T gerichtete Bewegungsrichtung aufweist, die um einen Winkel α gegenüber der Senkrechten zu der Transportrichtung T geneigt ist. Das Trennelement 27 wird also beim Bewegen aus der Warteposition in die Trennposition zumindest bezüglich einer Teilkomponente in Richtung der Transportrichtung T bewegt. Vorteilhafterweise ist das Trennelement 27 dazu schwenkbar um eine Drehachse D angeordnet. So tritt das Trennelement 27 beim Schwenken um die Drehachse D zunächst im Wesentlichen senkrecht in den Verbindungsbereich 19 ein. Im Verlauf der weiteren Schwenkbewegung ändert sich der Winkel α gegenüber der Senkrechten zu der Transportrichtung T kontinuierlich mit der Schwenkbewegung. Folglich "wandert" das Trennelement 27 mit der von dem Transportförderer 11 bewegten Geflügelkarkasse 13 mit, wobei sich mit tieferem Eindringen des Trennelements 27 in den Verbindungsbereich 19 auch die Geschwindigkeitskomponente des Trennelements 27 in die Transportrichtung T kontinuierlich erhöht. Auf diese Weise wir ein Abbremsen der Geflügelkarkasse 13 und folglich ein mögliches Verrutschen auf dem Stützkörper 12 zuverlässig vermieden und eine präzise und exakte Schnittführung unter vollständiger Ablösung des Brustknorpels 14 von der Geflügelkarkasse 13 gewährleistet.

Vorzugsweise ist die Geflügelkarkasse 13 auf dem Stützkörper 11 kopfwärts in Transportrichtung T angeordnet, also mit dem Brustbein 16 in die Transportrichtung T weisend. So kommt die Geflügelkarkasse 13 nach dem erfolgten Querschneiden des Verbindungsbereiches 19 unmittelbar frei. Alternativ ist die Geflügelkarkasse 13 auch mit einem nachlaufenden Kopfende, also mit dem Brustknorpel 14 in Transportrichtung T vorauslaufend, durch die Vorrichtung 10 transpörtierbar.

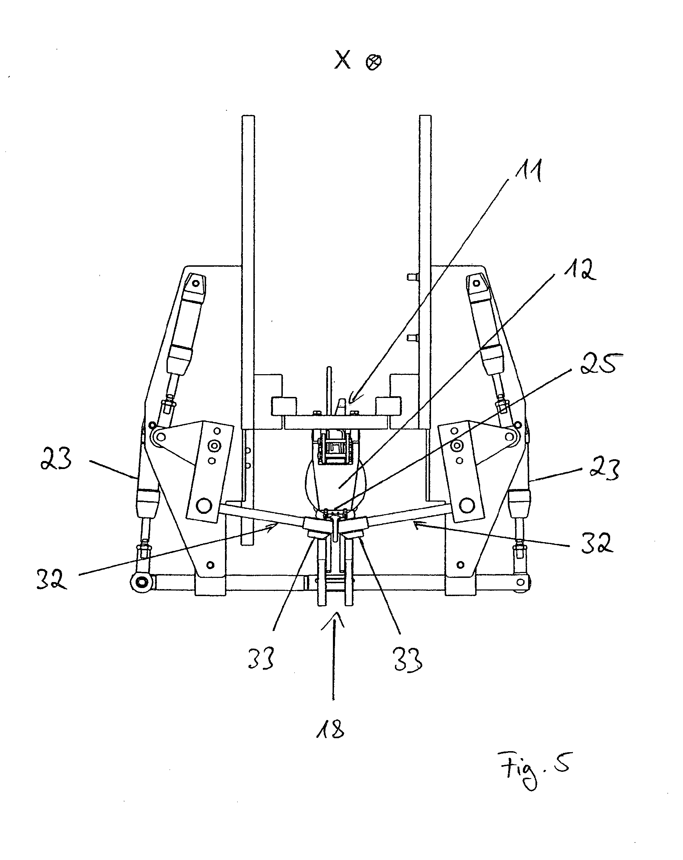

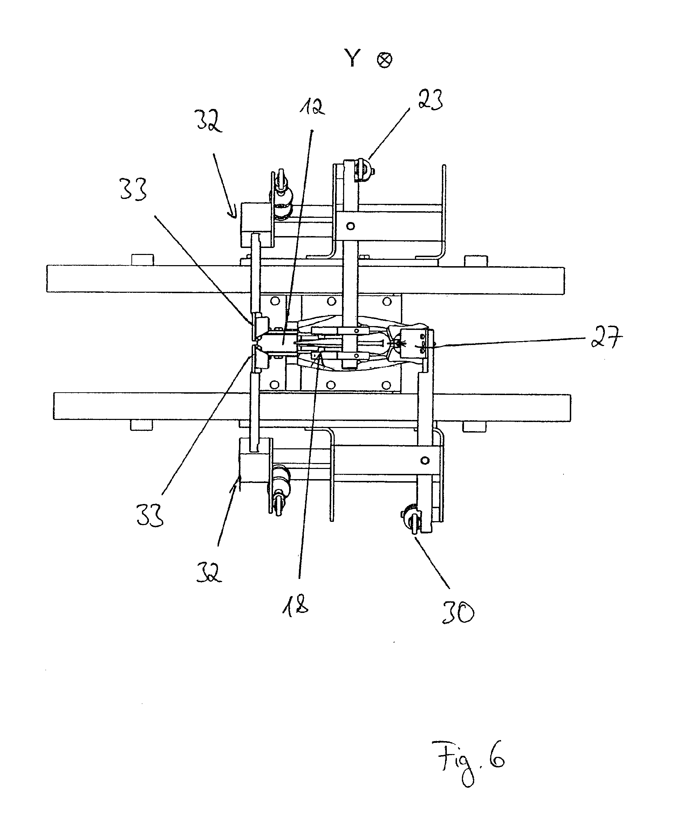

Gemäß einer weiter bevorzugten Ausbildung der Erfindung ist dem Schneidmittel 17 eine Schabeeinrichtung 32 zugeordnet, die insbesondere aus den Figuren 5 und 6 ersichtlich und bezüglich der Transportrichtung T dem Schneidmittel 17 vorgeordnet ist. Die Schabeeinrichtung 32 umfasst zumindest zwei Schabeelemente 33, die beidseits an die Geflügelkarkasse 13 seitlich an den Brustknorpel 14 bzw. das Brustbein 16 heranführbar eingerichtet und ausgebildet sind. Passiert der Stützkörper 12 mit der Geflügelkarkasse 13 die Schabeeinrichtung 32, werden die Schabeelemente 33 an den Brustknorpel 14 bzw. das Brustbein 16 der Geflügelkarkasse 13 herangeführt, und an dem Brustknorpel 14 befindliches Restfleisch wird durch die Relativbewegung zwischen der in der Transportrichtung T geförderten Geflügelkarkasse 13 gegenüber den Schabeelementen 33 abgeschabt. Alternativ sind die Schabeelemente 33 federnd unter Ausübung einer vorbestimmten Anpresskraft auf den Brustknorpel 14 bzw. das Brustbein 16 beweglich angeordnet. Gemäß einer weiteren alternativen Ausführungsform sind die Schabeelemente 33 ortsfest angeordnet.

## Patentansprüche

1. Vorrichtung **(10),** ausgebildet und eingerichtet zum vollständigen Lösen zumindest eines Teils des Brustknorpels **(14)** von einer vom Brustfleisch befreiten Geflügelkarkasse **(13),** umfassend einen zumindest einen Stützkörper **(12)** zum Aufnehmen und Fixieren der Geflügelkarkasse **(13)** aufweisenden Transportförderer **(11)** zum Fördern der Geflügelkarkasse **(13)** in eine Transportrichtung T, ein Schneidmittel **(17)** zum Trennen des Brustknorpels **(14)** oder Teilen davon von der Geflügelkarkasse **(13)** und eine Steuereinrichtung zum Steuern des Schneidmittels **(17),**
Wobei der Transportförderer **(11)** mit dem oder jedem Stützkörper **(12)** derart ausgerichtet und angetrieben ist, dass eine auf dem Stützkörper **(12)** anzuordnende Geflügelkarkasse **(13)** mit ihrer Verbindungslinie zwischen dem Brustbein **(16)** und dem Brustknorpel **(14)** parallel zu der Transportrichtung T orientiert ist,
**dadurch gekennzeichnet, dass**
das Schneidmittel **(17)** ein Doppelmesser **(18)** umfasst, das zum Längseinschneiden der Geflügelkarkasse **(13)** zumindest entlang eines Teilabschnitts beidseits des Brustknorpels **(14)** und/oder beidseits des Brustbeins **(16)** ausgebildet und eingerichtet ist, und
das Schneidmittel **(17)** ein dem Doppelmesser **(18)** nachgeordnetes Trennelement **(27)** umfasst, das zum Querschneiden eines Verbindungsbereiches **(19)** zwischen dem Brustknorpel **(14)** und dem Brustbein **(16)** unter vollständiger Ablösung des Brustknorpels **(14)** von der Geflügelkarkasse **(13)** ausgebildet und eingerichtet ist.

2. Vorrichtung nach Anspruch 1, **dadurch gekennzeichnet, dass** das Doppelmesser **(18)** aus einer Warteposition in eine Schneidposition und zurück bewegbar angeordnet ist.

3. Vorrichtung nach Anspruch 1 oder 2, **dadurch gekennzeichnet, dass** das Doppelmesser **(18)** zumindest zwei voneinander beabstandete Einzelmesser **(20)** umfasst, wobei die Einzelmesser **(20)** zumindest im Wesentlichen parallel zueinander ausgerichtet sind.

4. Vorrichtung nach Anspruch 3, **dadurch gekennzeichnet, dass** der Abstand der Einzelmesser **(20)** einstellbar ist.

5. Vorrichtung nach einem der Ansprüche 1 bis 4, **dadurch gekennzeichnet, dass** dem Doppelmesser **(18)** zumindest ein Stellelement **(23)** zum Bewegen des Doppelmessers **(18)** aus der Warteposition in die Schneidposition und zurück zugeordnet ist.

6. Vorrichtung nach einem der Ansprüche 1 bis 5, **dadurch gekennzeichnet, dass** dem Doppelmesser **(18)** eine korrespondierende Gegenlage **(25)** zugeordnet ist.

7. Vorrichtung nach Anspruch 6, **dadurch gekennzeichnet, dass** die Gegenlage **(25)** integraler Bestandteil des Stützkörpers **(12)** ist.

8. Vorrichtung nach einem der Ansprüche 1 bis 7, **dadurch gekennzeichnet, dass** das Trennelement **(27)** aus einer Warteposition in eine Trennposition und zurück bewegbar angeordnet ist.

9. Vorrichtung nach Anspruch 8, **dadurch gekennzeichnet, dass** das Trennelement **(27)** derart bewegbar angeordnet ist, dass das Trennelement **(27)** beim Bewegen aus der Warteposition in die Trennposition eine zur Transportrichtung T senkrechte Bewegungsrichtung aufweist.

10. Vorrichtung nach Anspruch 8, **dadurch gekennzeichnet, dass** das Trennelement **(27)** derart bewegbar angeordnet ist, dass das Trennelement **(27)** beim Bewegen aus der Warteposition in die Trennposition eine in die Transportrichtung T gerichtete Bewegungsrichtung aufweist, die um einen Winkel α gegenüber einer Senkrechten zu der Transportrichtung T geneigt ist.

11. Vorrichtung nach Anspruch 10, **dadurch gekennzeichnet, dass** das Trennelement **(27)** schwenkbar um eine Drehachse D angeordnet ist.

12. Vorrichtung nach einem der Ansprüche 8 bis 11, **dadurch gekennzeichnet, dass** dem Trennelement **(27)** zumindest ein Stellelement **(30)** zum Bewegen des Trennelements (27) aus der Warteposition in die Trennposition und zurück zugeordnet ist.

13. Verfahren zum vollständigen Lösen zumindest eines Teils des Brustknorpels **(14)** von einer vom Brustfleisch befreiten Geflügelkarkasse **(13)** umfassend die Schritte:
Transportieren der Geflügelkarkasse **(13)** in eine Transportrichtung T mittels eines mindestens einen Stützkörper **(12)** zum Aufnehmen und Fixieren der Geflügelkarkasse **(13)** aufweisenden Transportförderers **(11),** derart, dass eine Verbindungslinie zwischen dem Brustbein **(16)** und dem Brustknorpel **(14)** der Geflügelkarkasse **(13)** parallel zu der Transportrichtung T orientiert ist,
Längseinschneiden der Geflügelkarkasse **(13)** zumindest entlang eines Teilabschnitts beidseits des Brustknorpels **(14)** und/oder beidseits des Brustbeins **(16)** mittels eines Doppelmessers **(18),** und anschließendes
Querschneiden eines Verbindungsbereiches **(19)** zwischen dem Brustknorpel **(14)** und dem Brustbein **(16)** unter vollständiger Ablösung des Brustknorpels **(14)** von der Geflügelkarkasse **(13)** mittels eines Trennelementes **(27).**

14. Verfahren nach Anspruch 13, **dadurch gekennzeichnet, dass** das Querschneiden des Verbindungsbereichs **(19)** zwischen dem Brustknorpel **(14)** und dem Brustbein **(16)** senkrecht zu der Transportrichtung T ausgeführt wird.

15. Verfahren nach Anspruch 13 oder 14, **dadurch gekennzeichnet, dass** das Quereinschneiden des Verbindungsbereichs **(19)** zwischen dem Brustknorpel **(14)** und dem Brustbein **(16)** in die Transportrichtung T gerichtet und um einen Winkel α gegenüber einer Senkrechten zu der Transportrichtung T geneigt ausgeführt wird.

## Claims

1. Apparatus **(10)** which is designed and equipped for completely removing at least one part of the breast cartilage **(14)** from a poultry carcass **(13)** that is free of breast meat, comprising a transporting conveyor **(11)** for conveying the poultry carcass **(13)** in a transporting direction T having at least one support body **(12)** for receiving and fixing the poultry carcass **(13),** a cutting means **(17)** for separating the breast cartilage **(14)** or parts thereof from the poultry carcass **(13)** and a control device for controlling the cutting means **(17),**
wherein the transporting conveyor **(11)** is aligned with the or each support body **(12)** and driven such that a poultry carcass **(13)** to be arranged on the support body **(12)** is oriented with its connecting line between the breast bone **(16)** and the breast cartilage **(14)** parallel to the transporting direction T,
**characterised in that**
the cutting means **(17)** comprises a double blade **(18)** which is designed and equipped for longitudinally cutting into the poultry carcass **(13)** at least along a sub-portion on both sides of the breast cartilage **(14)** and/or both sides of the breast bone **(16),** and
the cutting means **(17)** comprises a separating element **(27)** arranged downstream of the double blade **(18),** which is designed and equipped for laterally cutting a connecting region **(19)** between the breast cartilage **(14)** and the breast bone **(16),** thereby completely removing the breast cartilage **(14)** from the poultry carcass **(13).**

2. Apparatus according to claim 1, **characterised in that** the double blade **(18)** is arranged so as to be movable from a waiting position into a cutting position and back.

3. Apparatus according to claim 1 or 2, **characterised in that** the double blade **(18)** comprises at least two individual blades **(20)** spaced apart from one another, wherein the individual blades **(20)** are aligned at least substantially parallel to one another.

4. Apparatus according to claim 3, **characterised in that** the spacing between the individual blades **(20)** may be adjusted.

5. Apparatus according to any one of claims 1 to 4, **characterised in that** at least one actuating element **(23)** is assigned to the double blade **(18)** for moving the double blade **(18)** from the waiting position into the cutting position and back.

6. Apparatus according to any one of claims 1 to 5, **characterised in that** a corresponding counter-surface **(25)** is assigned to the double blade **(18).**

7. Apparatus according to claim 6, **characterised in that** the counter-surface **(25)** is an integral component of the support body **(12).**

8. Apparatus according to any one of claims 1 to 7, **characterised in that** the separating element **(27)** is arranged so as to be movable from a waiting position into a separating position and back.

9. Apparatus according to claim 8, **characterised in that** the separating element **(27)** is movably arranged such that, when moved from the waiting position into the separating position, the separating element **(27)** has a direction of movement which is perpendicular to the transporting direction T.

10. Apparatus according to claim 8, **characterised in that** the separating element **(27)** is movably arranged such that, when moved from the waiting position into the separating position, the separating element **(27)** has a direction of movement oriented in the transporting direction T, which is inclined by an angle α to a vertical relative to the transporting direction T.

11. Apparatus according to claim 10, **characterised in that** the separating element **(27)** is pivotably arranged about a rotational axis D.

12. Apparatus according to any one of claims 8 to 11, **characterised in that** at least one actuating element **(30)** is assigned to the separating element **(27)** for moving the separating element **(27)** from the waiting position into the separating position and back.

13. A method for completely removing at least one part of the breast cartilage **(14)** from a poultry carcass **(13)** that is free of breast meat, comprising the steps:
transporting the poultry carcass **(13)** in a transporting direction T by means of a transporting conveyor **(11)** having at least one support body **(12)** for receiving and fixing the poultry carcass **(13)** such that a connecting line between the breast bone **(16)** and the breast cartilage **(14)** of the poultry carcass **(13)** is oriented parallel to the transporting direction T,
longitudinally cutting into the poultry carcass **(13)** at least along a sub-portion on both sides of the breast cartilage **(14)** and/or both sides of the breast bone **(16)** by means of a double blade **(18),** and then
laterally cutting a connecting region **(19)** between the breast cartilage **(14)** and the breast bone **(16)** thereby completely removing the breast cartilage **(14)** from the poultry carcass **(13)** by means of a separating element **(27).**

14. Method according to claim 13, **characterised in that** the lateral cutting of the connecting region **(19)** between the breast cartilage **(14)** and the breast bone **(16)** is carried out perpendicular to the transporting direction T.

15. Method according to claim 13 or 14, **characterised in that** the lateral cutting of the connecting region **(19)** between the breast cartilage **(14)** and the breast bone **(16)** is oriented in the transporting direction T and is carried inclined by an angle α to a vertical relative to the transporting direction T.

## Revendications

1. Un dispositif (10) conçu et configuré pour détacher complètement au moins une partie du cartilage sterno-costal (14) d'une carcasse de volaille (13) dont la viande de poitrine a été retirée, qui intègre un convoyeur de transport (11) comportant au moins un support (12) d'accueil et de fixation de la dite carcasse de volaille (13) pour transporter la dite carcasse de volaille (13) dans une direction T, un moyen de coupe (17) pour séparer le cartilage sternocostal (14) ou des parties de celui-ci de la carcasse de volaille (13) et un dispositif de commande pour commander le dit moyen de coupe (17),
dans lequel le dit convoyeur de transport (11) est aligné avec le support (12) ou l'ensemble des supports de façon à ce que la ligne de raccord entre le sternum (16) et le cartilage sternocostal (14) d'une carcasse de volaille (13) placée sur le dit support (12) soit parallèle à la dite direction de transport T,
**caractérisé en ce que**
le dit moyen de coupe (17) comporte une double lame (18) conçue et configurée pour découper dans la longueur la dit carcasse de volaille (13) au moins le long d'un tronçon partiel courant des deux côtés du cartilage sterno-costal (14) et/ou des deux côtés du sternum (16) ; et
le dit moyen de coupe (17) comporte un séparateur (27) dépendant de la dite double lame (18) conçu et configuré pour découper transversalement une zone de raccord (19) entre le cartilage sterno-costal (14) et le sternum (16) une fois le cartilage sterno-costal (14) entièrement détaché de la carcasse de volaille (13).

2. Un dispositif selon la revendication 1, **caractérisé en ce que** la dite double lame (18) peut être déplacée d'une position d'attente vers une position de découpe et inversement.

3. Un dispositif selon la revendication 1 ou 2, **caractérisé en ce que** la dite double lame (18) comporte au moins deux lames individuelles (20) espacées les unes des autres, les dites lames individuelles (20) étant disposées de façon au moins essentiellement parallèle les unes aux autres.

4. Un dispositif selon la revendication 3, caractérisé ne ce que l'écart entre les dites lames individuelles (20) est réglable.

5. Un dispositif selon l'une des revendications 1 à 4, **caractérisé en ce qu'**au moins un actionneur (23) est associé aux dites doubles lames (18) pour déplacer la dite double lame (18) de la position d'attente vers la position de coupe et inversement.

6. Un dispositif selon l'une des revendications 1 à 5, **caractérisé en ce qu'**au moins contre-appui (25) correspondant est associé à la dite double lame (18).

7. Un dispositif selon la revendication 6, **caractérisé en ce que** le dit contre-appui (25) est partie intégrante du dit support (12).

8. Un dispositif selon l'une des revendications 1 à 7, **caractérisé en ce que** le dit séparateur (27) peut être déplacé d'une position d'attente vers une position de séparation et inversement.

9. Un dispositif selon la revendication 8, **caractérisé en ce que** le dit séparateur (27) peut être déplacé de façon à suivre lorsqu'il est déplacé de la dite position d'attente vers la dite position de séparation une direction perpendiculaire à la direction de transport T.

10. Un dispositif selon la revendication 8, **caractérisé en ce que** le dit séparateur (27) peut être déplacé de façon à suivre lorsqu'il est déplacé de la dite position d'attente vers la dite position de séparation une direction de déplacement inclinée d'un angle α par rapport à la perpendiculaire à la direction de transport T.

11. Un dispositif selon la revendication 10, **caractérisé en ce que** le dit séparateur (27) peut être orienté autour d'un axe de rotation D.

12. Un dispositif selon l'une des revendications 8 à 11, **caractérisé en ce qu'**au moins un actionneur (30) est associé au dit séparateur (27) pour déplacer le dit séparateur (27) de la dite position d'attente vers la dite position de séparation et inversement.

13. Un procédé pour détacher complètement au moins une partie du cartilage sterno-costal (14) d'une carcasse de volaille (13) dont la viande de poitrine a été retirée, comportant les étapes suivantes :
le transport de la dite carcasse de volaille (13) dans une direction T à l'aide d'un convoyeur de transport (11) comportant au moins un support (12) d'accueil et de fixation de la dite carcasse de volaille (13), de façon à ce qu'une ligne de raccord entre le sternum (16) et le cartilage sterno-costal (14) de la dite carcasse de volaille (13) soit parallèle à la direction de transport T,
la découpe dans le sens de la longueur de la dite carcasse de volaille (13) au moins le long d'un tronçon partiel courant des deux côtés du cartilage sterno-costal (14) et/ou des deux côtés du sternum (16), à l'aide d'une double lame (18); et enfin
la découpe d'une zone de raccord (19) entre le cartilage sterno-costal (14) et le sternum (16) une fois le cartilage sterno-costal (14) entièrement détaché de la carcasse de volaille (13), à l'aide d'un séparateur (27).

14. Un procédé selon la revendication 13, **caractérisé en ce que** la découpe transversale de la dite zone de raccord (19) entre le cartilage sterno-costal (14) et le sternum (16) s'effectue de façon perpendiculaire à la direction de transport T.

15. Un procédé selon la revendication 13 ou 14, **caractérisé en ce que** la découpe transversale de la dite zone de raccord (19) entre le cartilage sterno-costal (14) et le sternum (16) est orientée suivant une direction inclinée d'un angle α par rapport à la perpendiculaire à la direction de transport T.
